# FASCICULE DE BREVET EUROPEEN

(11) **EP 3 033 255 B1**
(45) Date de publication et mention de la délivrance du brevet: **04.10.2017**
(21) Numéro de dépôt: 14790168.0
(22) Date de dépôt: 04.08.2014
(51) Int. Cl.: B60T 13/52, B60K 6/12, B60W 10/18, B60W 20/00, B60T 17/02

(54) **PROCEDE DE PRODUCTION DE VIDE POUR UN VEHICULE AUTOMOBILE**
VERFAHREN ZUR VAKUUMHERSTELLUNG FÜR EIN KRAFTFAHRZEUG
PROCEDURE FOR GENERATING A VACUUM FOR AN AUTOMOTIVE VEHICLE

(30) Priorité: 13.08.2013 FR 1357986
(43) Date de publication de la demande: 22.06.2016
(73) Titulaire: Technoboost, 75116 Paris (FR)
(72) Inventeur: HABBANI, Ridouane, F-92110 Clichy (FR)
(74) Mandataire: Rosenberg, Muriel Sylvie
(86) Numéro de dépôt international: PCT/FR2014/052019
(87) Numéro de publication internationale: WO 2015/022462

(56) Documents cités:
- WO-A1-2012/063328
- WO-A1-2012/086088
- DE-T5-112011 101 176

## Description

Le domaine de l'invention concerne un procédé de production de vide pour dispositif de freinage de véhicule automobile hybride.

Un dispositif de freinage à dépression est utilisé sur les véhicules automobiles pour accroitre la force de freinage exercée par le conducteur. Il permet ainsi de réduire l'effort du conducteur sur le circuit hydraulique pour ralentir le véhicule. Un exemple d'un dispositif de freinage à dépression selon l'état de la technique est montré dans le document WO 2012/063328. Un dispositif de freinage à dépression comprend une chambre à dépression reliée au collecteur d'admission du moteur thermique. La force de freinage amplifiée est produite grâce au fonctionnement tournant en régime du moteur thermique. Le papillon du collecteur d'admission est fermé empêchant ainsi l'entrée d'air atmosphérique dans le collecteur. L'air de la chambre à dépression du dispositif de freinage est pompé par le fonctionnement tournant du moteur et est fourni au moyen d'un accès entre le collecteur et la chambre à dépression du dispositif de freinage. Cet accès d'air permet de produire du vide dans la chambre à dépression lors du fonctionnement tournant du moteur et d'amplifier la force de freinage. Un tel dispositif est par exemple décrit dans la demande de brevet français FR2855483. Bien que cette solution présente l'avantage de s'affranchir d'une pompe à vide dédiée au dispositif de freinage, cette configuration est énergivore en carburant, en particulier à l'arrêt du véhicule.

On connaît une autre solution de production de vide au moyen d'une pompe à vide couplée au dispositif de freinage, en particulier lorsque le moteur est arrêté. La pompe à vide peut être autonome et alimentée électriquement. Cependant, une telle pompe à vide présente des performances inférieures et ne permet pas un freinage satisfaisant d'un point de vue de la sécurité dans toutes les situations de roulage. On connaît la demande de brevet français FR2981901 décrivant un véhicule disposant de deux générateurs de dépression.

L'inconvénient d'un tel système pour les véhicules hybrides est l'augmentation du coût de la solution de production de vide, en particulier le nombre de pompes à vide ainsi que les moyens de contrôle des générateurs de dépression.

Pour réduire ce coût, on connaît une solution de production de vide comprenant une pompe à vide pouvant être entraînées par le moteur thermique ou directement par la transmission du groupe motopropulseur. La demanderesse a déposé par le passé la demande de brevet FR2977549 décrivant un tel système de freinage. Ce système permet de s'affranchir du fonctionnement du moteur tournant mais nécessite néanmoins l'utilisation d'une pompe à vide pour les phases de faibles vitesses et d'arrêt du véhicule.

Il réside donc un besoin de proposer une solution de production de vide alternative pour les véhicules automobiles moins consommatrice en carburant, moins onéreuse et satisfaisante pour toutes les phases de roulage du véhicule.

Plus précisément, l'invention concerne un procédé de production de vide dans une chambre à dépression d'un dispositif de freinage pour un véhicule automobile comprenant également un moteur thermique dont un collecteur d'admission est relié à la chambre à dépression permettant la production de vide dans la chambre à dépression en fonctionnement tournant du moteur et une première source d'énergie distincte du carburant pouvant actionner un premier moyen d'entrainement du moteur thermique.

Selon l'invention, le procédé comprend une première commande de la source d'énergie et du moyen d'entrainement pour entrainer le moteur de sorte à produire du vide dans la chambre à dépression. Le véhicule automobile comprend une deuxième source d'énergie distincte du carburant pouvant actionner un deuxième moyen d'entrainement du moteur thermique, et le procédé selon l'invention est caractérisé en ce que il comprend une deuxième commande de la deuxième source d'énergie et du deuxième moyen d'entrainement pour la production du vide dans la chambre à dépression si une condition de roulage ne permet pas à la première source d'énergie et au premier moyen d'entrainement de produire du vide.

Selon une variante, la première commande est déclenchée en fonction d'une consigne d'accélération du véhicule au regard d'un seuil d'accélération.

Selon une autre variante, la première commande est déclenchée en fonction d'une donnée de vitesse du véhicule au regard d'un seuil de vitesse du véhicule.

Selon une autre variante, la première commande est déclenchée en fonction de la capacité énergétique de la source d'énergie pour actionner le moyen d'entrainement associé au regard d'un seuil de niveau d'énergie.

De préférence, lors de la première commande, le moteur est piloté en régime moteur sans injection de carburant.

L'invention concerne également un véhicule automobile hybride comprenant un système de commande du groupe motopropulseur apte à appliquer le procédé de production de vide comprenant l'une quelconque des caractéristiques des variantes du procédé.

Avantageusement, le véhicule automobile hybride ne comporte pas de pompe à dépression pour produire du vide dans la chambre à dépression.

Il est prévu aussi selon l'invention un programme informatique comportant des instructions lisibles par un dispositif de calcul, comportant un processeur lié à une mémoire programmable, pour commander un système de commande d'un groupe motopropulseur de véhicule automobile et appliquer le procédé de production de vide présentant au moins l'une quelconque des caractéristiques précédentes.

Il est prévu aussi un support lisible par un dispositif de calcul contenant l'enregistrement du programme informatique.

Grâce à l'invention, la production de vide dans un véhicule hybride est rendue possible sans l'intervention d'une pompe à vide. Il permet ainsi d'économiser le coût de la pompe à vide, ainsi que la réduction de la consommation en carburant par l'utilisation d'autres sources d'énergie, en particulier la source régénérée à partir de l'énergie cinétique du véhicule.

Par ailleurs, le procédé de production de vide dans la chambre à dépression du système de frein permet d'utilisation de diverses sources d'énergie du groupe motopropulseur permettant d'exercer une dépression dans de nombreuses phases de roulage du véhicule.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
La figure 1 représente un véhicule automobile apte à appliquer le procédé de production de vide selon l'invention.
La figure 2 représente les étapes pour l'application d'une stratégie de production de vide selon l'invention.

L'invention concerne plus particulièrement les véhicules hybrides car ceux-ci disposent de plusieurs sources d'énergie que le procédé de production de vide permet d'exploiter pour réaliser la dépression nécessaire au dispositif de freinage. L'invention concerne les groupes motopropulseurs à motorisation hybride électrique ou à air comprimé comme il sera décrit plus précisément dans l'exemple de la description.

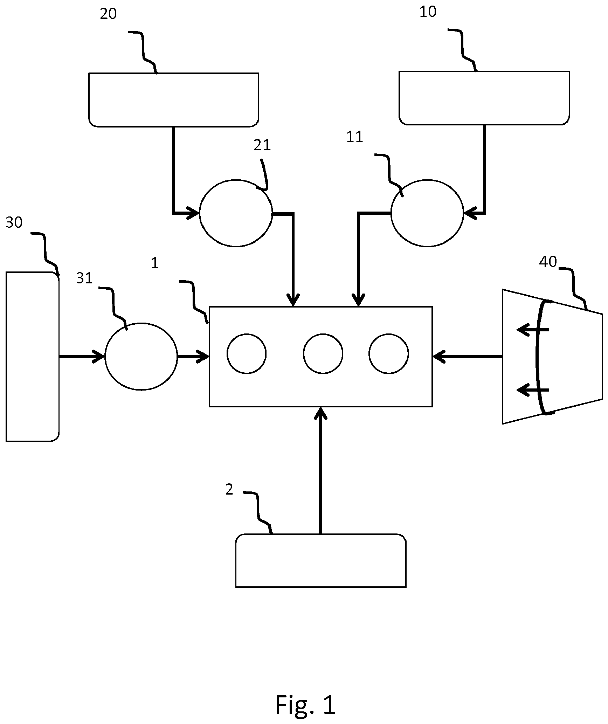

La figure 1 est un schéma simplifié de l'architecture d'un groupe motopropulseur à motorisation hybride d'un véhicule automobile comprenant un moteur thermique 1 couplé à une réserve de carburant 2 et une motorisation hydraulique représentée par les composants 10, 11, 20 et 21. Un circuit hydraulique relie une réserve 20, un moteur hydraulique 10 et une pompe hydraulique. Le véhicule automobile comprend également une transmission mécanique et un dispositif de freinage à dépression 40. La pompe hydraulique est reliée au circuit hydraulique et est couplée mécaniquement à la transmission mécanique. Le moteur hydraulique est relié au circuit hydraulique et est couplé mécaniquement à la transmission mécanique. La transmission mécanique est couplée mécaniquement au moteur thermique 1 et à un train de roues.

Dans ce mode de réalisation, le moteur thermique 1 est un moteur à essence alimenté par une réserve de carburant 2. Le moteur thermique 1 est commandé par un superviseur du groupe motopropulseur du véhicule. Le superviseur élabore les requêtes de commande du moteur thermique 1, notamment les requêtes de démarrage et arrêt du moteur et les requêtes des composants du moteur. De plus, le superviseur élabore les requêtes de consigne de couple aux roues en fonction d'algorithmes de la stratégie énergétique définissant les moyens de motorisation devant intervenir dans la fourniture de couple aux roues. Lorsque le véhicule hybride dispose d'un système de freinage récupératif, les fonctions de la stratégie énergétique définissent par ailleurs les lois de récupération d'énergie par le moyen récupératif d'énergie cinétique.

Le moteur thermique 1 est configuré de sorte à pouvoir opérer une dépression dans une chambre à dépression du dispositif de freinage 40. Pour cela, le collecteur d'admission d'air est relié à la chambre à dépression du dispositif de freinage 40. Lorsque le papillon du moteur thermique 1 est fermé, ou partiellement fermé, un accès d'air peut être ouvert entre la chambre à dépression du dispositif de freinage 40 et le collecteur d'admission d'air du moteur. Ainsi, lorsque le moteur thermique fonctionne et est alimenté en carburant pour fournir du couple et du régime une dépression est réalisée dans le dispositif de freinage.

Le superviseur du groupe motopropulseur commande l'opération de cette dépression lorsque par exemple le conducteur du véhicule exerce un freinage. Lorsqu'une requête de production de vide est activée, le superviseur transmet et coordonne les requêtes de commande appropriées au moteur thermique 1 et au dispositif de freinage 40 pour réaliser la dépression adéquate.

Ainsi, le véhicule automobile comprend un premier moyen de production de vide dont la dépression est générée à partir de la source d'énergie de carburant 2 permettant de mettre en fonctionnement tournant le moteur thermique 1. Lorsqu'une dépression est nécessaire, le superviseur peut commander la mise en fonctionnement tournant du moteur thermique 1 grâce au carburant et opérer la commande du moteur thermique 1 et du dispositif de freinage 40 pour permettre la production de vide dans la chambre à dépression. Dans cette première configuration de production de vide seul le carburant est utilisé pour mettre le moteur en fonctionnement tournant. Il s'agit généralement d'un mode de fonctionnement au ralenti dans lequel le papillon du moteur thermique 1 est partiellement fermé.

Par ailleurs, il est prévu selon l'invention que le groupe motopropulseur comprenne une deuxième source d'énergie 10 et un moyen d'entrainement 11 du moteur thermique 1. La source d'énergie 10 est un moteur hydraulique apte à être entrainé par les roues du véhicule pour générer un mouvement mécanique à partir de l'énergie cinétique du véhicule dans des phases de freinage récupératif. Le moyen d'entrainement 11 comprend une pompe hydraulique et une transmission mécanique. Le véhicule automobile comprend également un dispositif de freinage à dépression 40.

La transmission mécanique est un répartiteur de puissance pour transmettre la puissance du moteur thermique 1 vers la pompe hydraulique, le moteur hydraulique 10 et le train de roue. En outre, dans le cadre de l'invention, la transmission permet de transmettre la puissance mécanique en chemin inverse, c'est à dire de la pompe hydraulique au moteur thermique 1. Le moteur thermique 1 peut ainsi être mis en fonctionnement tournant à partir d'une énergie autre que le carburant.

Dans ce mode de réalisation le répartiteur de puissance est un train épicycloïdal. Il permet d'opérer plusieurs modes de motorisation du véhicule hybride, par exemple un premier mode dont la traction est exécutée par le moteur thermique 1, un deuxième mode dont la traction est exécutée par le moteur hydraulique 10 et un troisième mode de traction combinant le moteur thermique et le moteur hydraulique.

Ainsi, le superviseur du groupe motopropulseur peut commander le moteur hydraulique 10, la pompe hydraulique et le train épicycloïdal pour entrainer le moteur thermique 1 à partir de l'énergie cinétique récupérée durant une phase de récupération d'énergie. Des conditions de roulage sont surveillées, notamment des données d'accélération, de vitesse et le niveau d'énergie dans la réserve d'énergie associée 20, et cette phase de récupération d'énergie est déclenchée lorsque que les conditions sont respectées.

Donc, le véhicule automobile comprend un deuxième moyen de production de vide dont la dépression est générée à partir l'énergie cinétique du véhicule permettant de mettre en fonctionnement tournant le moteur thermique 1. Lorsqu'une dépression est nécessaire, le superviseur peut commander la mise en fonctionnement tournant du moteur thermique 1 grâce à l'énergie cinétique récupérée et peut opérer la commande du moteur thermique 1 et du dispositif de freinage 40 pour permettre la production de vide dans la chambre à dépression. Dans cette deuxième configuration de production de vide l'énergie cinétique est utilisée pour mettre le moteur en fonctionnement tournant avec un régime moteur assurant le pompage de l'air de la chambre à dépression. Le moteur est piloté sans injection de carburant pour sa mise en fonctionnement. Dans ce mode de fonctionnement le moteur thermique ne fournit pas de couple moteur.

A L'inverse, le moteur hydraulique 10 peut à partir d'énergie emmagasinée dans la réserve d'énergie 20 transmettre du couple aux roues. Le moteur thermique 1 peut également via le répartiteur de puissance transmettre une puissance mécanique au moteur hydraulique pour recharger la réserve d'énergie 20.

Le véhicule automobile comprend une troisième source d'énergie 20 et un deuxième moyen 21 d'entrainement du moteur thermique 1. La source d'énergie hydraulique 20 sous la forme d'une réserve d'air comprimé peut actionner une pompe hydraulique et un répartiteur de puissance, ici un train épicycloïdal. La pompe hydraulique et le train épicycloïdal constituent le moyen d'entrainement 21 du moteur thermique 1.

Le superviseur du groupe motopropulseur peut commander la pompe hydraulique et le train épicycloïdal pour entrainer le moteur thermique 1 à partir de l'énergie emmagasinée dans la réserve 20. Le fluide de la réserve 20 actionne la pompe 21 qui restitue l'énergie sous la forme d'un mouvement mécanique permettant de mettre en fonctionnement tournant le moteur thermique 1.

De préférence, les moyens d'entrainement 11 et 21 sont une unique pompe hydraulique et un unique répartiteur de puissance.

Ainsi, le véhicule automobile comprend un troisième moyen de production de vide dont la dépression est générée à partir de l'énergie emmagasinée dans la réserve d'air comprimée 20 permettant de mettre en fonctionnement tournant le moteur thermique 1. Lorsqu'une dépression est nécessaire, le superviseur peut commander la mise en fonctionnement tournant du moteur thermique 1 grâce à l'énergie d'air comprimée de la réserve et opérer la commande du moteur thermique 1 et du dispositif de freinage 40 pour permettre la production de vide dans la chambre à dépression. Dans cette troisième configuration de production de vide l'énergie de la réserve d'air comprimée est utilisée pour mettre le moteur en fonctionnement tournant avec un régime moteur assurant le pompage de l'air de la chambre à dépression. Le moteur est piloté sans injection de carburant pour sa mise en fonctionnement. Dans ce mode de fonctionnement le moteur thermique ne fournit pas de couple moteur.

Le véhicule automobile comprend une quatrième source d'énergie 30 et un troisième moyen 31 d'entrainement du moteur thermique 1. La source d'énergie 30 est une réserve d'énergie électrique reliée à une machine électrique 31 pouvant mettre le moteur thermique 1 en fonctionnement tournant. La machine électrique est attelée au moteur thermique et est couplée par un embrayage, une courroie ou un crabot.

En variante, la machine électrique 31 entraine indirectement le moteur thermique 1 via une transmission mécanique, par exemple un train épicycloïdal.

Ainsi, le véhicule automobile comprend un quatrième moyen de production de vide dont la dépression est générée à partir de l'énergie emmagasinée dans la réserve électrique 30 permettant de mettre en fonctionnement tournant le moteur thermique 1. Lorsqu'une dépression est nécessaire, le superviseur peut commander la mise en fonctionnement tournant du moteur thermique 1 grâce à l'énergie électrique de la réserve 30 et d'opérer la commande du moteur thermique 1 et du dispositif de freinage 40 pour permettre la production de vide dans la chambre à dépression. Dans cette quatrième configuration de production de vide l'énergie de la réserve électrique est utilisée pour mettre le moteur en fonctionnement tournant avec un régime moteur assurant le pompage de l'air de la chambre à dépression. Le moteur est piloté sans injection de carburant pour sa mise en fonctionnement. Dans ce mode de fonctionnement le moteur thermique ne fournit pas de couple moteur.

Finalement, pour la production de vide, le moteur thermique peut être mis en fonctionnement tournant au ralenti par injection d'une quantité de carburant pour commander un régime moteur suffisant pour le pompage de l'air dans la chambre à dépression. Dans les autres configurations de production de vide, le moteur thermique est entrainé par l'un des moyens d'entrainement 11, 21, 31 pour fournir un régime moteur suffisant pour le pompage de l'air dans la chambre à combustion. Le moteur est piloté sans injection de carburant par une requête de régime moteur. Il ne fournit alors pas de couple moteur.

L'avantage de l'invention est de permettre l'entrainement du moteur thermique 1 à partir d'une source d'énergie autre que le carburant à disposition dans le véhicule. Ainsi le moteur thermique est mis en fonctionnement tournant dans un mode de consommation nulle en carburant.

Le véhicule comprend plusieurs sources d'énergie et moyens d'entrainement pour mettre le moteur thermique en fonctionnement tournant et produire du vide dans le dispositif de freinage à dépression. Le superviseur peut commander chaque source d'énergie et moyen d'entrainement en coordination avec le moteur thermique et le dispositif de freinage pour produire du vide dans des situations de roulage spécifiques à chaque source d'énergie et moyen d'entrainement associé.

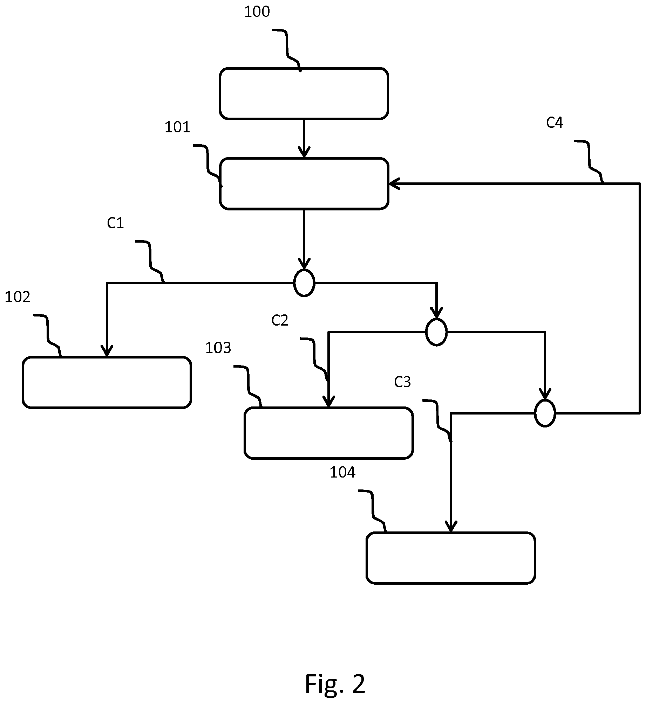

Un exemple de stratégie de production de vide exploitant les différents moyens de production de vide du véhicule est décrit en figure 2. Les différents moyens sont coordonnés afin d'optimiser la consommation d'énergie du véhicule et permettre la production de vide dans toutes les situations de roulage.

En situation initiale 100, le groupe motopropulseur est dans une situation de roulage pendant laquelle le groupe motopropulseur n'est pas actif. Lorsque le groupe motopropulseur est actif et qu'une requête de production de vide est transmise au superviseur, le procédé de production de vide entre dans la situation de roulage 101. Dans cette situation de roulage, le groupe motopropulseur est configuré pour que le vide soit produit à partir de la source d'énergie du carburant uniquement. Ainsi le superviseur transmet une requête de commande pour entrainer le moteur thermique 1 à partir du carburant 2 seulement et produire du vide dans la chambre à dépression du dispositif de freinage 40. Le moteur est mis en mode de fonctionnement au ralenti.

La production de vide opérée à partir du moteur thermique 1 entrainé par une autre source d'énergie que le carburant 2 peut être déclenchée lorsque plusieurs conditions de roulage sont respectées.

Une première condition de roulage C1 correspond à une situation de roulage 102 de récupération d'énergie cinétique et lorsque cette condition est détectée le superviseur déclenche la production de vide à partir de l'énergie cinétique du véhicule récupérée. Le superviseur, dans le cadre du procédé de production de vide, transmet une commande à destination du moteur hydraulique 10 et de l'ensemble 11 constitué par la pompe et le train épicycloïdal pour entrainer le moteur thermique 1 de sorte à produire du vide dans la chambre à dépression du dispositif de freinage 40. La condition de roulage C1 est la valeur d'une consigne d'accélération, par exemple la consigne issue de la pédale d'accélération du véhicule, au regard d'un seuil d'accélération et la valeur de la vitesse du véhicule au regard d'un seuil de vitesse du véhicule.

Ainsi, si la vitesse du véhicule est supérieure à un seuil de vitesse et que le conducteur n'accélère pas alors la condition C1 est respecté, indiquant ainsi une situation de freinage récupératif. Le superviseur commande l'entrainement du moteur à partir de cette énergie cinétique récupérée pour produire le vide. De préférence, la production de vide est autorisée à partir de la configuration récupératrice d'énergie si la réserve d'énergie 20 est pleine. Dans le cas contraire, le superviseur commande prioritairement la récupération d'énergie pour la réserve d'énergie 20.

Par ailleurs, un autre arbitrage pour déclencher la production de vide dans cette configuration est lorsque la condition de roulage C1 est détectée et lorsque le niveau de dépression n'est pas suffisant dans la chambre à dépression.

Si la condition de roulage C1 n'est pas détectée et qu'aucune autre condition de roulage pour déclencher la production de vide à partir d'une source d'énergie autre que le carburant n'est détectée, alors la production de vide est opérée à partir du moteur thermique 1 entrainé uniquement par le carburant. Il s'agit de la situation de roulage correspondant à la situation 101.

Une deuxième condition de roulage C2 correspond à une situation de roulage 103 avec une vitesse non nulle et en phase d'accélération supérieure à zéro ou nulle. Lorsque cette condition est occurrente le superviseur déclenche la production de vide à partir de l'énergie emmagasinée dans la réserve d'énergie 20. Le superviseur, dans le cadre du procédé de production de vide, transmet une commande à destination de la réserve d'énergie 20 et de l'ensemble 21 constitué par la pompe et le train épicycloïdal pour entrainer le moteur thermique 1 de sorte à produire du vide dans la chambre à dépression du dispositif de freinage 40. La condition de roulage C2 est la valeur de la vitesse du véhicule au regard d'un seuil de vitesse du véhicule, pour une phase de roulage qui n'est pas une phase de décélération.

Dans cette situation de roulage, le superviseur commande l'entrainement du moteur à partir de la réserve d'énergie 20 pour produire le vide. De préférence, la production de vide est autorisée à partir de cette configuration si la vitesse du véhicule est supérieure à un seuil de vitesse et que le niveau d'énergie dans la réserve est supérieur à un niveau d'énergie prédéterminé, considéré suffisant. Dans le cas contraire, le superviseur commande la production de vide à partir du carburant 2.

Si la condition de roulage C2 n'est pas détectée et qu'aucune autre condition de roulage pour déclencher la production de vide à partir d'une source d'énergie autre que le carburant n'est détectée, alors la production de vide est opérée à partir du moteur thermique 1 entrainé uniquement par le carburant. Il s'agit de la situation de roulage correspondant à la situation 101.

Une troisième condition de roulage C3 correspond à une situation de roulage 104 avec une vitesse non nulle et en phase d'accélération supérieure à zéro ou nulle. De plus, si le niveau d'énergie de la réserve d'énergie 20 est inférieur au niveau d'énergie prédéterminé et que le niveau d'énergie de la réserve d'énergie 30 est supérieur à un niveau d'énergie prédéterminé, alors le superviseur déclenche la production de vide à partir de l'énergie emmagasinée dans la réserve d'énergie 30. Le superviseur, dans le cadre du procédé de production de vide, transmet une commande à destination de la batterie électrique 30 et de la machine électrique 31 pour entrainer le moteur thermique 1 de sorte à produire du vide dans la chambre à dépression du dispositif de freinage 40. La condition de roulage C3 pour déclencher la production de vide dépend de la valeur de la vitesse du véhicule au regard d'un seuil de vitesse du véhicule, pour une phase de roulage qui n'est pas une phase de décélération, de la valeur du niveau d'énergie dans la réserve d'énergie 20 et de la valeur du niveau d'énergie dans la réserve 30. Si la condition C3 n'est pas respectée, le superviseur commande la production de vide à partir du carburant 2.

Si la condition de roulage C3 n'est pas détectée et qu'aucune autre condition de roulage pour déclencher la production de vide à partir d'une source d'énergie autre que le carburant n'est détectée, alors la production de vide est opérée à partir du moteur thermique 1 entrainée uniquement par le carburant. Il s'agit de la situation de roulage correspondant à la situation 101.

Lorsque qu'aucune des réserves d'énergie 10, 20, 30 n'est à disposition pour la production de vide, par exemple si le véhicule n'est pas dans une situation de freinage récupératif et que les niveaux d'énergie des réserves 20 et 30 sont inférieurs à des niveaux de remplissage suffisant, et que le moteur thermique 1 est en fonctionnement tournant pour transmettre du couple aux roues alors le superviseur peut transmettre une commande du moteur thermique pour produire du vide au détriment de l'agrément de conduite. Si l'agrément de conduite est privilégié au procédé de production de vide, par mesure de sécurité un deuxième dispositif de freinage est alors utilisé pour opérer une phase de freinage.

L'invention s'applique à tout véhicule et procédé de production de vide comprenant une combinaison de tout ou partie des sources d'énergie à disposition pour entrainer le moteur thermique 1. Un procédé de production de vide utilisant d'autres conditions de déclenchement de production de vide entre également dans le cadre de l'invention. L'intérêt de l'invention est de proposer un véhicule automobile sans pompe à vide.

Les fonctions de calcul et de commande du groupe motopropulseur et de chaque composant intervenant pour la mise en oeuvre du procédé de production de vide sont exécutées par un programme informatique mémorisé dans un circuit intégré à mémoire programmable du groupe motopropulseur, mémoire réinscriptible ou non effaçable. Il s'agit généralement du superviseur du groupe motopropulseur comprenant un dispositif de calcul à microprocesseur associé à une mémoire programmable. Les fonctions de calcul intervenant pour la mise en oeuvre du procédé peuvent être exécutées à partir de un ou plusieurs calculateurs. L'affectation des calculateurs n'affecte pas la portée de l'invention.

## Revendications

1. Procédé de production de vide dans une chambre à dépression d'un dispositif de freinage (40) pour un véhicule automobile comprenant également un moteur thermique (1) dont un collecteur d'admission est relié à la chambre à dépression permettant la production de vide dans la chambre à dépression en fonctionnement tournant du moteur et une première source d'énergie (10 ;20 ;30) distincte du carburant (2) pouvant actionner un premier moyen d'entrainement (11 ; 21 ; 31) du moteur thermique (1), le procédé comprenant une première commande de la source d'énergie (10 ;20 ;30) et du moyen d'entrainement (11 ; 21 ; 31) pour entrainer le moteur (1) de sorte à produire du vide dans la chambre à dépression, **caractérisé en ce que** le véhicule automobile comprend une deuxième source d'énergie distincte du carburant pouvant actionner un deuxième moyen d'entrainement (11 ; 21 ; 31) du moteur thermique (1), et le procédé comprend une deuxième commande de la deuxième source d'énergie et du deuxième moyen d'entrainement pour la production du vide dans la chambre à dépression si une condition de roulage ne permet pas à la première source d'énergie et au premier moyen d'entrainement de produire du vide.

2. Procédé selon la revendication 1, **caractérisé en ce que** la première commande est déclenchée en fonction d'une consigne d'accélération du véhicule au regard d'un seuil d'accélération (C1).

3. Procédé selon l'une quelconque des revendications 1 à 2, **caractérisé en ce que** la première commande est déclenchée en fonction d'une donnée de vitesse du véhicule au regard d'un seuil de vitesse du véhicule (C2).

4. Procédé selon l'une quelconque des revendications 1 à 3, **caractérisé en ce que** la première commande est déclenchée en fonction de la capacité énergétique de la source d'énergie pour actionner le moyen d'entrainement associé au regard d'un seuil de niveau d'énergie (C3).

5. Procédé selon l'une quelconque des revendications 1 à 4, **caractérisé en ce que**, lors de la première commande, le moteur (1) est piloté en régime moteur sans injection de carburant.

6. Véhicule automobile hybride comprenant un système de commande du groupe motopropulseur apte à appliquer le procédé de production de vide selon l'une quelconque des revendications 1 à 5.

7. Véhicule automobile hybride selon la revendication 6, **caractérisé en ce qu'**il ne comporte pas de pompe à dépression pour produire du vide dans la chambre à dépression.

8. Programme informatique comportant des instructions lisibles par un dispositif de calcul, comportant un processeur lié à une mémoire programmable, pour commander un système de commande d'un groupe motopropulseur de véhicule automobile et appliquer le procédé de production de vide selon l'une quelconque des revendications 1 à 7.

9. Support lisible par un dispositif de calcul contenant l'enregistrement du programme informatique selon la revendication 8.

## Patentansprüche

1. Verfahren zur Vakuumherstellung in einer Unterdruckkammer einer Bremsvorrichtung (40) für ein Kraftfahrzeug, umfassend auch einen Verbrennungsmotor (1), dessen Ansaugkrümmer mit der Unterdruckkammer verbunden ist, wobei die Vakuumherstellung in der Unterdruckkammer während des Drehbetriebs des Motors ermöglicht wird, und eine erste Energiequelle (10; 20; 30), die vom Treibstoff (2) getrennt ist und ein erstes Antriebsmittel (11; 21; 31) des Verbrennungsmotors (1) betätigen kann, wobei das Verfahren eine erste Steuerung der Energiequelle (10; 20; 30) und des Antriebsmittels (11; 21; 31), um den Motor (1) anzutreiben, um Vakuum in der Unterdruckkammer herzustellen, **dadurch gekennzeichnet, dass** das Kraftfahrzeug eine zweite vom Treibstoff getrennte Energiequelle umfasst, die ein zweites Antriebsmittel (11; 21; 31) des Verbrennungsmotors (1) betätigen kann, wobei das Verfahren eine zweite Steuerung der zweiten Energiequelle und des zweiten Antriebsmittels zur Herstellung des Vakuums in der Unterdruckkammer umfasst, wenn es eine Fahrbedingung der ersten Energiequelle und dem ersten Antriebsmittel nicht ermöglicht, Vakuum zu erzeugen.

2. Verfahren nach Anspruch 1, **dadurch gekennzeichnet, dass** die erste Steuerung in Abhängigkeit von einem Beschleunigungssollwert des Fahrzeugs im Vergleich mit einer Beschleunigungsgrenze (C1) ausgelöst wird.

3. Verfahren nach einem der Ansprüche 1 bis 2, **dadurch gekennzeichnet, dass** die erste Steuerung in Abhängigkeit von einem Geschwindigkeitsdatum des Fahrzeugs im Vergleich mit einer Geschwindigkeitsgrenze des Fahrzeugs (C2) ausgelöst wird.

4. Verfahren nach einem der Ansprüche 1 bis 3, **dadurch gekennzeichnet, dass** die erste Steuerung in Abhängigkeit von der Energiekapazität der Energiequelle, um das zugehörige Antriebsmittel zu betätigen, im Vergleich mit einer Energieniveaugrenze (C3) ausgelöst wird.

5. Verfahren nach einem der Ansprüche 1 bis 4, **dadurch gekennzeichnet, dass** bei der ersten Steuerung der Motor (1) mit Motordrehzahl ohne Treibstoffeinspritzung gesteuert wird.

6. Hybridfahrzeug, umfassend ein Steuersystem des Antriebsstrangs, das geeignet ist, das Verfahren zur Vakuumherstellung nach einem der Ansprüche 1 bis 5 anzuwenden.

7. Hybridfahrzeug nach Anspruch 6, **dadurch gekennzeichnet, dass** es keine Vakuumpumpe zur Herstellung des Vakuums in der Unterdruckkammer umfasst.

8. Computerprogramm, umfassend von einer Recheneinheit lesbare Befehle, umfassend einen Prozessor, der mit einem programmierbaren Speicher verbunden ist, um ein Steuersystem eins Antriebsstrangs eines Kraftfahrzeugs zu steuern und das Verfahren zur Vakuumherstellung nach einem der Ansprüche 1 bis 7 anzuwenden.

9. Von einer Rechenvorrichtung lesbarer Träger, umfassend die Aufzeichnung des Computerprogramms nach Anspruch 8.

## Claims

1. A procedure for generating a vacuum in a vacuum chamber of a braking device (40) for a motor vehicle, also including a heat engine (1), an intake manifold of which is connected to the vacuum chamber permitting the generating of a vacuum in the vacuum chamber in the running operation of the engine and a first energy source (10; 20; 30) distinct from the fuel (2) being able to actuate a first driving means (11; 21; 31) of the heat engine (1), the procedure including a first control of the energy source (10; 20; 30) and of the driving means (11; 21; 31) to drive the engine (1) so as to produce vacuum in the vacuum chamber, **characterized in that** the motor vehicle includes a second energy source distinct from the fuel, being able to actuate a second driving means (11; 21; 31) of the heat engine (1), the procedure includes a second control of the second energy source and of the second driving means for the production of the vacuum in the vacuum chamber if a running condition does not permit the first energy source and the first driving means to produce vacuum.

2. The procedure according to Claim 1, **characterized in that** the first command is triggered as a function of an acceleration setpoint of the vehicle with regard to an acceleration threshold (C1).

3. The procedure according to any one of Claims 1 to 2, **characterized in that** the first command is triggered as a function of a speed data of the vehicle with regard to a speed threshold of the vehicle (C2).

4. The procedure according to any one of Claims 1 to 3, **characterized in that** the first command is triggered as a function of the energy capacity of the energy source for actuating the associated driving means with regard to an energy level threshold (C3).

5. The procedure according to any one of Claims 1 to 4, **characterized in that**, during the first command, the engine (1) is driven at engine speed without fuel injection.

6. A hybrid motor vehicle including a control system of the powertrain, able to apply the procedure for generating a vacuum according to any one of Claims 1 to 5.

7. The hybrid motor vehicle according to Claim 6, **characterized in that** it does not comprise a vacuum pump for producing vacuum in the vacuum chamber.

8. A computer program comprising instructions readable by a computer, comprising a processor linked to a programmable memory, for controlling a control system of a powertrain system of a motor vehicle and for applying the process for producing a vacuum according to any one of Claims 1 to 7.

9. A computer-readable medium containing the record of the computer program according to Claim 8.
